# EUROPÄISCHE PATENTANMELDUNG

(11) **EP 3 319 049 A1**
(43) Veröffentlichungstag der Anmeldung: **09.05.2018**
(21) Anmeldenummer: 16197705.3
(22) Anmeldetag: 08.11.2016
(51) Int. Cl.: G07B 17/00, G01V 8/20

(54) **SENSORSYSTEM UND VERFAHREN ZUR FESTSTELLUNG EINES FÖRDEROBJEKTS IN EINEM ÜBERWACHUNGSBEREICH**

(71) Anmelder: Siemens Aktiengesellschaft, 80333 München (DE)
(72) Erfinder: LINKE, Martin, 81371 München (DE)
(74) Vertreter: Maier, Daniel Oliver

(57) **Zusammenfassung**

Die Erfindung offenbart ein Sensorsystem (2) für ein Fördersystem (4) zur Feststellung eines in einem Überwachungsbereich (6) des Fördersystems (4) vorhandenen Förderobjekts (8), beispielsweise einer Postsendung. Das Sensorsystem (2) umfasst eine den Überwachungsbereich (6) abdeckende Sensoreinheit (10), welche einen Licht emittierenden Sender (10a) und einen als optischen Sensor ausgestalteten Empfänger (10b) umfasst und eine mit der Sensoreinheit (10) assoziierte Steuereinrichtung (12). Die Steuereinrichtung (12) ist ausgestaltet, das Förderobjekt (8) anhand einer differentiellen Änderung des detektierten Signals festzustellen.

## Beschreibung

Die vorliegende Erfindung betrifft ein Sensorsystem für ein Fördersystem zur Feststellung eines in einem Überwachungsbereich vorhandenen Förderobjekts.

Die Feststellung von einem Förderobjekt an einer bestimmten Position eines Fördersystems ist wichtig für einen kontrollierten Fördervorgang. Basierend auf der Feststellung einer An- bzw. Abwesenheit des Förderobjekts, welches von einem Fördermittel, beispielsweise einem Förderband, bewegt wird, an einer bestimmten Position des Fördersystems, kann das Fördermittel kontrolliert angesteuert werden. Die Position des Förderobjekts kann überwacht und durch An- bzw. Abschalten des Fördermittels bzw. eine Regelung der Fördergeschwindigkeit kann eine kontrollierte Beförderung erzielt werden. Dies ist besonders relevant für Fördersysteme, die die Förderobjekte auch sortieren, wie beispielsweise Postsortieranlagen.

Stand der Technik ist das Feststellen von Förderobjekten mit optischen Sensorsystemen anhand von veränderter Reflexion oder Transmission, wobei die Sensorsysteme Sensoren mit einer gewissen sensitiven Sensorfläche umfassen. Das Sensorsystem zeigt in einem durch seine Ausgestaltung, insbesondere betreffend Empfindlichkeit, Reichweite und Anordnung, bestimmten Überwachungsbereich die An- bzw. Abwesenheit eines Förderobjekts an. Der Überwachungsbereich ist derjenige Bereich, in dem ein Förderobjekt mit dem Sensorsystem feststellbar ist. Sobald ein gewisser Anteil der Sensorfläche belegt ist, also das vom Sensor detektierte Signal in seiner Intensität einen festgelegten Schwellenwert unterschreitet, wird an einem Schaltausgang die Feststellung von einem Förderobjekt in dem Überwachungsbereich signalisiert.

Das Feststellen und Erkennen von bewegten Förderobjekten auf Förderbändern ist immer mit Unschärfe verbunden. Dies liegt einerseits an den mechanischen Grenzen in der wirtschaftlichen Herstellung, andererseits auch an physikalischen Eigenschaften wie Zittern oder Schwingungen des Förderobjekts und Teilen des Fördersystems, was insbesondere bei bewegten Teilen des Fördersystems relevant ist, aber auch an der Ungleichmäßigkeit der zu vermessenden Förderobjekte. Beim Einsatz von optischen Sensoren wie Lichtschranken, Lichtbändern oder ähnlichen Sensoren wirkt jede Störung im Sinn von Bewegung auf die Auflösung und somit auf das kleinste zu erkennende Förderobjekt. Daher ist das Feststellen von Förderobjekten nur bis zu einer unteren Größe möglich, kleine, insbesondere sehr flache Förderobjekte wie Briefe oder Großbriefe sind nicht zuverlässig erkennbar und von das Signal beeinflussenden Störungen unterscheidbar.

Auch die Festlegung eines Schwellenwertes ist problematisch. Denn der Schwellenwert muss einerseits niedrig genug gewählt sein, um sehr kleine und/ oder sehr flache Förderobjekte erfassen zu können, andererseits muss der Schwellenwert hoch genug gewählt sein, damit Unregelmäßigkeiten des Fördermittels, beispielsweise durch Verschleiß bedingt leicht hochgezogene Förderbandränder, oder weitere Störungen fehlerhaft als ein gar nicht vorhandenes Förderobjekt festgestellt werden. Verschmutzungen der Sensorfläche verringern das vom Sensor detektierte Signal permanent und setzen so die Empfindlichkeit des Sensorsystems herab. Fehlauslösungen geschehen so leichter, da die Verschmutzung ebenso wie eine Abdeckung der Sensorfläche durch das Förderobjekt zum Überschreiten des Schwellenwerts beiträgt.

Der vorliegenden Erfindung liegt daher die Aufgabe zugrunde, eine verbesserte Feststellung von Förderobjekten in einem Überwachungsbereich eines Fördersystems zu ermöglichen. Diese Aufgabe wird durch die in den unabhängigen Ansprüchen beschriebenen Lösungen gelöst.

Die erfindungsgemäße Lösung sieht ein Sensorsystem für ein Fördersystem zur Feststellung eines in einem Überwachungsbereich des Fördersystems vorhandenen Förderobjekts, beispielsweise einer Postsendung, vor. Das Fördersystem umfasst eine den Überwachungsbereich abdeckende Sensoreinheit, welche einen Licht emittierenden Sender und einen als optischen Sensor ausgestalteten Empfänger umfasst und eine mit der Sensoreinheit assoziierte Steuereinrichtung zur Auswertung des vom Sensor detektieren Signals. Die Steuereinrichtung ist ausgestaltet, das Förderobjekt anhand einer differentiellen Änderung des detektierten Signals festzustellen.

Um das Förderobjekt noch zuverlässiger festzustellen, kann der Sensor eine ortsauflösende Sensorfläche umfassen. Dies ermöglicht es, eine Ortsauflösung und/ oder einen Anteil einer Belegung der Sensorfläche auszulesen.

Gemäß einer Ausführungsform kann die Steuereinrichtung ausgestaltet sein, das Förderobjekt zudem anhand einer differentiellen Änderung einer Belegung der Sensorfläche festzustellen. Dies erlaubt eine noch robustere Feststellung des Förderobjekts, da zusätzlich zu einer differentiellen Änderung des detektierten Signals ein Schwellenwert eines Anteils der Belegung der Sensorfläche und/ oder eine Positionierung der Belegung herangezogen werden kann. Die differentielle Änderung der Belegung ist unbeeinflusst von konstanten Verschmutzungen der Sensorfläche.

Um eine technisch erprobte und zugleich kostengünstige Ausgestaltung des Sensorsystems zu ermöglichen, kann die Sensoreinheit als Lichtschranke ausgestaltet sein. Hierbei umfasst der Begriff Licht den sichtbaren Bereich des elektromagnetischen Spektrums, sowie die angrenzenden Bereiche, insbesondere Infrarot- und Ultraviolettstrahlung.

Gemäß einer weiteren Ausführungsform kann der Überwachungsbereich im Wesentlichen orthogonal zu einer Bewegungsrichtung des Förderobjekts ausgerichtet sein. So tritt eine besonders große Steigung des detektierten Signals bei Ein- und Ausbringen des Förderobjekts in den Überwachungsbereich auf.

Gemäß einer weiteren Ausführungsform kann die Steuereinrichtung ausgestaltet sein, festzustellen, ob das Förderobjekt in den Überwachungsbereich hineintransportiert und/ oder aus dem Überwachungsbereich heraustransportiert wird. Anhand des zeitlichen Abstands zwischen einem detektierten Heraustransportieren und Hineintransportieren kann unter Zuhilfenahme der Fördergeschwindigkeit des Fördersystems der räumliche Abstand zwischen einander nachfolgenden Förderobjekten bestimmt werden.

Gemäß einer Ausführungsform kann die Steuereinrichtung ausgestaltet sein, das Fördersystem in Antwort auf eine Feststellung des Förderobjekts anzusteuern. So wird eine kontrollierte und intelligente Ansteuerung des Fördersystems mit möglichst geringer Verzögerung sichergestellt.

Um Störungen nicht fälschlicherweise als Förderobjekte festzustellen, kann die Steuereinrichtung eine Auslöseschwelle gespeichert haben, die so gewählt ist, dass im Überwachungsbereich befindliche Teile des Fördersystems nicht als Förderobjekt erkannt werden. Die Auslöseschwelle kann so gewählt werden, dass in dem Fördersystem typische Schwankungen unterhalb der Auslöseschwelle liegen. Die Auslöseschwelle kann in Bezug auf den absoluten Wert und/ oder die differentielle Änderung des Signals festgelegt werden.

Hinsichtlich eines Verfahrens wird die vorstehend genannte Aufgabe gelöst durch ein Verfahren zur Feststellung eines in einem Überwachungsbereich eines Fördersystems vorhandenen Förderobjekts, beispielsweise einer Postsendung, mit einer den Überwachungsbereich abdeckenden Sensoreinheit, welche einen Licht emittierenden Sender und einen als optischen Sensor ausgestalteten Empfänger umfasst. Das Verfahren umfasst die folgenden Verfahrensschritte:
a) Bewegen des Förderobjekts;
b) Detektieren eines Signals durch den Sensor; und
c) Feststellen des Förderobjekts im Überwachungsbereich anhand einer differentiellen Änderung des detektierten Signals.

Um das Signal ortsauflösend zu detektierten und dadurch ein noch zuverlässigeres, kann der Sensor eine ortsauflösende Sensorfläche umfassen.

Gemäß einer Ausführungsform kann ein Feststellen des Förderobjekts anhand einer Flächenbelegung der Sensorfläche, insbesondere einer Änderung der Flächenbelegung, erfolgen. Auf diese Weise kann zusätzlich zu einer Änderung der Intensität des detektierten Signals die Flächenbelegung herangezogen werden und so ein noch zuverlässigeres Feststellen ermöglicht werden. Die Flächenbelegung kann anteilig und/ oder ortsaufgelöst zum Auslesen herangezogen werden.

Um die Sensoreinheit mit einer erprobten und ausfallsicheren Technologie zu realisieren, kann die Sensoreinheit als Lichtschranke ausgestaltet sein. Aufgrund der Verbreitung von Lichtschranken kann das Verfahren so mit relativ kostengünstigen und sehr gut erprobten Sensoreinheiten, die leicht erhältliche und kostengünstige Bauteile umfassen, durchgeführt werden.

Gemäß einer weiteren Ausführungsform kann ein Ansteuern des Fördersystems in Antwort auf eine Feststellung des Förderobjekts erfolgen. Dies umfasst beispielsweise eine Kontrolle der Fördergeschwindigkeit des Fördersystems, sowie ein Abbremsen bzw. Wiederanfahren von Fördermitteln des Fördersystems. So können basierend auf dem Feststellen eines Förderobjekts eines oder mehrere Förderobjekte gezielt positioniert und somit beispielsweise vereinzelt werden.

Um das Verfahren robuster zu machen gegen zufällige Änderungen des detektierten Signals generierende Störungen, kann die differentielle Änderung des detektierten Signals eine Auslöseschwelle überschreiten müssen, damit im Überwachungsbereich befindliche Teile des Fördersystems nicht als Förderobjekt festgestellt werden.

Ausführungsformen der Erfindung werden nachfolgend anhand der Figuren beispielsweise näher erläutert. Dabei zeigen:
Figur 1 ein Sensorsystem für ein Fördersystem mit seitlicher Detektion; und
Figur 2 ein Lichttaster umfassendes Sensorsystem in Aufsicht.

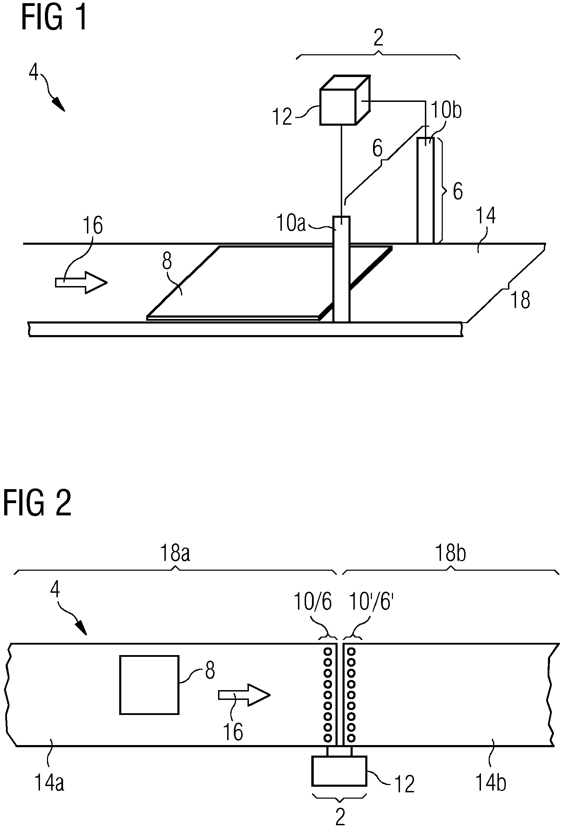

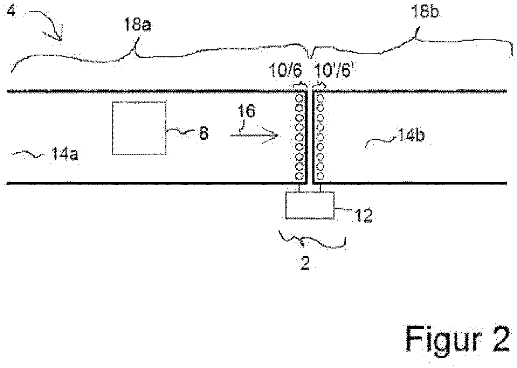

Figur 1 zeigt gemäß einer Ausführungsform der Erfindung ein Sensorsystem 2 für ein Fördersystem 4, welches zum Transport von Förderobjekten 8 ausgestaltet ist, mit seitlicher Detektion des Förderobjekts 8. Das Sensorsystem 2 umfasst eine Sensoreinheit 10, welche einen Sender 10a und einen Empfänger 10b umfasst. Der Sender 10a generiert und emittiert elektromagnetische Strahlung und der Empfänger 10b detektiert ein von einer An- bzw. Abwesenheit des Förderobjekts 8 im Überwachungsbereich 6 beeinflussbares Signal. Die Sensoreinheit 10 ist für die Erzeugung und Detektion von Licht optimiert ausgestaltet, wobei Licht sowohl das sichtbare Licht, als auch die an das sichtbare Spektrum angrenzenden Bereiche des Infrarot- und Ultraviolettstrahlung bezeichnet. Der vorzugsweise länglich in der Vertikalen ausgerichtete, als optischer Sensor ausgestaltete Empfänger 10b umfasst eine lichtempfindliche Sensorfläche.

Das Förderobjekt 8 liegt auf dem als Förderband ausgestalteten Fördermittel 14 einer Förderstrecke 18 auf, welche das Förderobjekt 8 entlang einer Transportrichtung 16 transportiert. Die einander gegenüberliegenden Sender 10a und Empfänger 10b definieren den Überwachungsbereich 6. Der Empfänger detektiert das vom Empfänger ausgesendete Licht als Signal, wobei das Signal von der An- bzw. Abwesenheit von Objekten, insbesondere natürlich des Förderobjekts 8, im Überwachungsbereich abhängt.

Der Überwachungsbereich 6 ist derjenige Bereich, in dem ein Förderobjekt 8 festgestellt werden kann. Somit wird die Größe und Position des Überwachungsbereichs 6 von der Empfindlichkeit des Empfängers 10b, der verwendeten Wellenlänge und Bündelung des Lichts sowie der Anordnung der Sensoreinheit 10, insbesondere der geometrischen Anordnung von Sender 10a und Empfänger 10b, bestimmt. Der Überwachungsbereich 6 wird somit von der Sensoreinheit 10 abgedeckt. Mit dem Sender 10a und dem Empfänger 10b assoziiert und verbindbar ist eine Steuereinrichtung 12, welche das vom Empfänger 10b detektierte Signal in Abhängigkeit von dem vom Sender 10a emittierten Lichtauswertet. Zudem ist die Steuereinrichtung 12 auch ausgestaltet zur Ansteuerung des Fördersystems 4, insbesondere in Antwort auf das detektierte Signal und somit abhängig von der Feststellung von An- bzw. Abwesenheit des Förderobjekts 8.

Das hier dargestellte Förderobjekt 8 ist ein Brief, das Fördersystem 4 eine Briefsortieranlage, aber auch andere dünne Förderobjekte 8 anderer Fördersysteme 4, beispielsweise Papier, Großbriefe und andere Postsendungen, aber auch kommissionierbare Güter, sind mit einem gleichartigen ausgestalteten Sensorsystem 2 detektierbar. Die Ausmaße der Förderobjekte 8, die mit dem erfindungsgemäßen Sensorsystem 2 detektierbar sind, sind nach unten begrenzt, nicht jedoch nach oben - jedes durch den Überwachungsbereich 6 hindurchtransportierbares Förderobjekt 8 ist prinzipiell detektierbar. Da der dargestellte Überwachungsbereich 6 nicht nach oben abgeschlossen ist, betrifft dies bei seitlicher Anordnung der Sensoreinheit 10 insbesondere die Höhe der Förderobjekte 8. Eine im Wesentlichen orthogonale Ausrichtung des Überwachungsbereichs 6 zur Transportrichtung 16 des Fördermittels 14, die mit der Bewegungsrichtung des Förderobjekts 8 übereinstimmt, ist besonders vorteilhaft. Hierzu wird die Sensorfläche im Wesentlichen parallel zur Bewegungsrichtung des Förderobjekts 8 ausgerichtet angeordnet.

Durch Feststellung eines Förderobjekts 8 an durch den Überwachungsbereich 6 definierten Positionen des Fördersystems 4 kann der Transport des Förderobjekts 8 entlang der Förderstrecke 18 überwacht werden. Da das Förderobjekt 8 beim Stoppen und Anfahren des Fördermittels 14 ins Rutschen kommen kann und so seine Position unkontrolliert verändert, kann eine Positionsüberwachung nicht alleine rechnerisch anhand der bekannten Fördergeschwindigkeit erfolgen. Durch das Rutschen kann beispielsweise eine bereits erzielte Vereinzelung mehrerer Förderobjekte 8 zunichte gemacht werden und es kann erforderlich sein, die Fördermittel 14 so anzusteuern, dass die Förderobjekte 8 so kontrolliert zu transportieren, dass ihre Abstände wieder korrigiert werden. Die anhand der Fördergeschwindigkeit des Fördermittels 14 vorhergesagte Position des Förderobjekts 8 wird mit der Realität abgeglichen.

Das Hineinbewegen des Förderobjekts 8 in den Überwachungsbereich 6 verringert bei einander gegenüberliegenden Sender 10a und Empfänger 10b die Transmission des vom Sender 10a emittierten Lichts und somit das vom Empfänger 10b detektierte Signal. Eine Messgröße des Signals ist seine vom Empfänger erfasste Intensität. Bei Anordnung von Sender 10a und Empfänger 10b auf einer gemeinsamen Seite verändert sich durch das Einbringen des Förderobjekts 8 die Reflexion und somit ebenfalls das detektierte Signal. In Abhängigkeit von der Ausgestaltung der Sensoreinheit 10 steigt oder fällt das detektierte Signal beim Hineintransportieren des Förderobjekts 8 in den Überwachungsbereich 6 bzw. fällt oder steigt beim Heraustransportieren, wobei für ein zuverlässiges Feststellen eines Förderobjekts 8 die differentielle Änderung bzw. die Steigung des Signals größer sein muss als eine durch eine Störung ausgelöstes Signal. Die Steuereinrichtung 12 ist ausgestaltet, zwischen Ein- und Ausbringen des Förderobjekts 8 in den Überwachungsbereich 6 zu unterscheiden. Die Steuereinrichtung 12 hat eine Auslöseschwelle gespeichert, um zwischen Störung und Förderobjekt 8 zu unterscheiden. Die Auslöseschwelle stellt einen Schwellenwert dar, den die Steigung des Signals überschreiten muss. Zudem kann noch festgelegt werden, dass das detektierte Signal in seiner Intensität und/ oder Belegung einen absoluten Schwellenwert überschreiten muss. Die Auslöseschwelle wird mittels Kalibration bestimmt. Leicht hochgebogene Förderbandränder und weitere Unregelmäßigkeiten des Fördermittels 14 sowie des Fördersystems 4 im Überwachungsbereich 6 stellen eine Störung dar, da sie das Signal ebenfalls differentiell verändern. Die detektierte Intensität korreliert mit einer Abdeckung bzw. Belegung des Empfängers 10b. Verschmutzungen des Empfängers 10b könnten fälschlicherweise als eine durch das Förderobjekt 8 erzeugte Belegung interpretiert werden, verändern somit ebenfalls das detektierte Signal, jedoch nicht zeitlich veränderlich. Die Sensorfläche des Empfängers 10b kann die Belegung absolut über die Intensität des detektierten Signals und/ oder ortsaufgelöst detektieren kann. Hierzu ist die Sensorfläche ortsauflösend ausgestaltet, wobei der Begriff ortsauflösend sowohl eine Auflösung des genauen Ortes der Belegung und somit eine zweidimensionale Auflösung, als auch eine einfache Segmentierung der Sensorfläche umfasst. Bei der einfachen Segmentierung, wenn beispielsweise der Sensor Pixel umfasst, die die Sensorfläche ausbilden und wobei die Pixel individuell auslesbar ausgestaltet sind, ist insbesondere ein Auslesen des Anteils der belegten Sensorfläche wichtig. Da das Förderobjekt 8 auf dem Fördermittel 14 aufliegt, müssen logischerweise durch das Förderobjekt 8 zwingend der untere Bereich der Sensorfläche belegt werden. Die Steuereinrichtung 12 ist daher ausgestaltet, das von der ortsauflösenden Sensorfläche erfasste Signal logisch auszuwerten. Die Sensorfläche kann somit zwischen partieller und vollständiger Belegung unterscheiden und die Steuereinrichtung 12 ist ausgestaltet, eine differentielle Änderung der Flächenbelegung der Sensorfläche zu erfassen und auszuwerten.

Umso größer das Förderobjekt 8, umso größer ist die Veränderung des Signals. Je kleiner das Förderobjekt 8, umso geringer fällt diese Veränderung aus. Das detektierte Signal wird zusammen mit Informationen des Senders 10a an die Steuereinrichtung 12 übermittelt. Das emittierte Licht kann zur Erhöhung der Empfindlichkeit moduliert werden. Die Steuereinrichtung 12 wertet die differentielle Änderung des Signals aus und stellt anhand dessen die An- bzw. Abwesenheit des Förderobjekts 8 im Überwachungsbereich fest. Das Einbringen des Förderobjekts 8 in den Überwachungsbereich 6 bzw. das Ausbringen aus dem Überwachungsbereich 6 hinaus zeigen sich in einer großen Steigung des Signals. Die oben beschriebenen Störungen hingegen stellen ein Grundrauschen dar, beeinflussen zwar die Intensität des Signals, weisen jedoch nur eine geringe differentielle Änderung bzw. Steigung auf. Die Steuereinrichtung 12 ist ausgestaltet, das Ein- und Ausbringen des Förderobjekts 8 in den Überwachungsbereich 6 anhand einer differentiellen Änderung des detektierten Signals festzustellen. Erst beim Überschreiten einer bestimmten Steigung, welche von Fördersystem 4 und Förderobjekt 8, Anordnung und Ausgestaltung der Sensoreinheit 10 abhängig ist, stellt die Steuereinrichtung 12 das Förderobjekt 8 fest.

Bei seitlicher Anordnung der Sensoreinheit 10 und einem Überwachungsbereich 6, der höher als das Förderobjekt 8 dimensioniert ist, korreliert das durch das durch das Förderobjekt 8 beeinflusste Signal mit der Dicke des Förderobjekts 8, was nicht der Fall ist bei einer Detektion von oben bzw. unten, also bei einer Anordnung der Sensoreinheit 10 oberhalb und/ oder unterhalb der Förderstrecke 18, wo das Signal mit der Breite des Förderobjekts 8 korreliert. Die Schwankungen hochgezogenen Ränder des Fördermittels 14 und weitere Störkonturen müssen für ein zuverlässiges Feststellen des Förderobjekts 8 weniger hoch als das Förderobjekt 8 selber sein, da nur dann sicher gestellt ist, dass die durch das Förderobjekt 8 ausgelöste Änderung des Signals steiler ist als die durch die Störkonturen ausgelösten Änderungen.

Figur 2 zeigt ein weiteres Fördersystem 4 mit einem Sensorsystem 2 gemäß einer weiteren Ausführungsform der Erfindung. Das Förderobjekt 8 wird in Transportrichtung 16 bewegt und vom ersten Fördermittel 14a auf das zweite Fördermittel 14b übergeben. Um das Übergeben von der ersten Förderstrecke 18a auf die zweite Förderstrecke 18b zu überwachen und um die Fördermittel 14a, 14b besonders effizient anzusteuern, sind am Ende der ersten Förderstrecke 18a und am Anfang der zweiten Förderstrecke 18b als eine Reihe von Lichttastern ausgestaltete Sensoreinheiten 10, 10' angeordnet, wobei die Überwachungsbereiche 6, 6' den Bereich oberhalb der Lichttaster abdecken. Zusätzlich zu einer Auswertung der differentiellen Änderung des Signals ist die die Steuereinrichtung 12 ausgestaltet, den absoluten Wert der Belegung einzelner und/ oder aller Lichttaster und/ oder die differentielle Änderung der Belegung einzelner Lichttaster auszulesen.

Ein Einbringen des Förderobjekts 8 in den Überwachungsbereich 6 äußert sich in einer Änderung der Belegung der Lichttaster. Das von den einzelnen Lichttastern detektierte Signal wird aufgelöst nach der Position der entsprechenden Lichttaster an die Steuereinrichtung 12 übermittelt. Sobald die Steuereinrichtung 12 feststellt - anhand der differentiellen Änderung des Signals sowie allenfalls zusätzlich anhand des absoluten Werts der Belegung - dass das Förderobjekt 8 in den Überwachungsbereich 6 hineintransportiert worden ist, steuert die Steuereinrichtung 12 das zweite Fördermittel 14b an. Die Steuereinrichtung 12 des Sensorsystems 2 steuert somit das Fördersystem 4 in Abhängigkeit von der Position des Förderobjekts 8 an. Das Übergeben des Förderobjekts 8 kann mit Hilfe der zweiten Sensoreinheit 10' überprüft werden. Sobald das Förderobjekt 8 den zweiten Überwachungsbereich 6' verlässt, ist das Übergeben abgeschlossen und das erste Fördermittel 14a kann in Abwesenheit weiterer Förderobjekte 8' abgestellt werden.

Bei mehreren ineinander mündenden Förderstrecken 18 ist die Steuereinrichtung 12 zudem ausgestaltet, einen geregelten Stopp- und Anlaufprozess der Fördermittel 14 anhand der detektierten Position mehrerer Förderobjekte 8 durchzuführen

Anstelle von zwei Sensoreinheiten 10, 10' wird in einer weiteren Ausführungsform das Übergeben von nur einer Sensoreinheit 10 kontrolliert, wobei die Sensoreinheit 10 dann zwischen der ersten Förderstrecke 18a und der zweiten Förderstrecke 18b positioniert wird.

Eine weitere Ausführungsform der Erfindung bei Anordnung der Lichttaster am Ende bzw. Anfang der Förderstrecken 18a, 18b wie in Figur 2 dargestellt ist eine seitliche Anordnung der Lichttaster analog zu Figur 1. Die Lichttaster bilden eine Sensoreinheit 10 aus und können entlang einer Länge und/ oder Breite des Überwachungsbereichs 6 angeordnet sein, wobei bei kleiner Ausgestaltung und naher Anordnung eine pixelartige Ausgestaltung einer Sensorfläche vorliegt.

Gemäß einer weiteren Ausführungsform ist die Sensoreinheit 10 als Lichtschranke ausgestaltet. Der Begriff Lichtschranke umfasst hierbei Einweg-Lichtschranken, Reflex-Lichtschranken, Reflex-Lichttaster und Lichtgitter, wobei die genaue Ausgestaltung die geometrische Anordnung von Sender 10a und Empfänger 10b bestimmt.

Gemäß einer weiteren Ausführungsform umfasst das Sensorsystem 2 zudem eine optisch bündelnde Vorrichtung, beispielsweise eine Fresnel-Linse, um das vom Sender 10a emittierte Licht besonders gut zu bündeln und so die Empfindlichkeit bei der Abgrenzung von Störungen und Förderobjekt 8 herabzusenken. Als Sender 10a kommen unter anderem Leuchtdioden, Infrarot-LEDs sowie für besonders präzise Anwendungen Licht aus einer Laserdiode. Die Sensoreinheit 10 kann zur Signalverstärkung zudem eine Reflektorvorrichtung umfassen. Der Empfänger 10a kann als Fototransistor, Fotodiode oder Fotowiderstand ausgestaltet sein. Um die Empfindlichkeit der Sensoreinheit 10 zu erhöhen, kann der Überwachungsbereich 6 zur Abschirmung von Störfrequenzen, insbesondere von sichtbarem Licht, abgeschirmt sein.

### Bezugszeichenliste

- 2: Sensorsystem
- 4: Fördersystem
- 6: Überwachungsbereich
- 8: Förderobjekt
- 10: Sensoreinheit
- 10a: Sender
- 10b: Empfänger
- 12: Steuereinrichtung
- 14: Fördermittel
- 16: Transportrichtung
- 18: Förderstrecke

## Patentansprüche

1. Sensorsystem (2) für ein Fördersystem (4) zur Feststellung eines in einem Überwachungsbereich (6) des Fördersystems (4) vorhandenen Förderobjekts (8), beispielsweise einer Postsendung, umfassend
- eine den Überwachungsbereich (6) abdeckende Sensoreinheit (10), welche einen Licht emittierenden Sender (10a) und einen als optischen Sensor ausgestalteten Empfänger (10b) umfasst; und
- eine mit der Sensoreinheit (10) assoziierte Steuereinrichtung (12) zur Auswertung des vom Sensor detektieren Signals; **dadurch gekennzeichnet, dass**
die Steuereinrichtung (12) ausgestaltet ist, das Förderobjekt (8) anhand einer differentiellen Änderung des detektierten Signals festzustellen.

2. Sensorsystem (2) nach Anspruch 1, **dadurch gekennzeichnet, dass**
der Sensor eine ortsauflösende Sensorfläche umfasst.

3. Sensorsystem (2) nach Anspruch 2, **dadurch gekennzeichnet, dass**
die Steuereinrichtung (12) ausgestaltet ist, das Förderobjekt (8) zudem anhand einer differentiellen Änderung einer Belegung der Sensorfläche festzustellen.

4. Sensorsystem (2) nach einem der Ansprüche 1 bis 3, **dadurch gekennzeichnet, dass**
die Sensoreinheit (10) als Lichtschranke ausgestaltet ist.

5. Sensorsystem (2) nach einem der Ansprüche 1 bis 4, **dadurch gekennzeichnet, dass**
der Überwachungsbereich (6) im Wesentlichen orthogonal zu einer Bewegungsrichtung des Förderobjekts (8) ausgerichtet ist.

6. Sensorsystem (2) nach einem der Ansprüche 1 bis 5, **dadurch gekennzeichnet, dass**
die Steuereinrichtung (12) ausgestaltet ist, festzustellen, ob das Förderobjekt (8) in den Überwachungsbereich (6) hineintransportiert und/ oder aus dem Überwachungsbereich (6) heraustransportiert wird.

7. Sensorsystem (2) nach einem der Ansprüche 1 bis 6, **dadurch gekennzeichnet, dass**
die Steuereinrichtung (12) ausgestaltet ist, das Fördersystem (4) in Antwort auf eine Feststellung des Förderobjekts (8) anzusteuern.

8. Sensorsystem (2) nach einem der Ansprüche 1 bis 7, **dadurch gekennzeichnet, dass**
die Steuereinrichtung (12) eine Auslöseschwelle gespeichert hat, die so gewählt ist, dass im Überwachungsbereich (6) befindliche Teile des Fördersystems (4) nicht als Förderobjekt (8) erkannt werden.

9. Verfahren zur Feststellung eines in einem Überwachungsbereich (6) eines Fördersystems (4) vorhandenen Förderobjekts (8), beispielsweise einer Postsendung, mit einer den Überwachungsbereich (6) abdeckenden Sensoreinheit (10), welche einen Licht emittierenden Sender (10a) und einen als optischen Sensor ausgestalteten Empfänger (10b) umfasst, umfassend die folgenden Verfahrensschritte
a) Bewegen des Förderobjekts (8);
b) Detektieren eines Signals durch den Sensor; und
c) Feststellen des Förderobjekts (8) im Überwachungsbereich (6) anhand einer differentiellen Änderung des detektierten Signals.

10. Verfahren nach Anspruch 9, **dadurch gekennzeichnet, dass** der Sensor eine ortsauflösende Sensorfläche umfasst.

11. Verfahren nach einem der Ansprüche 9 bis 10, zudem umfassend den Verfahrensschritt
Feststellen des Förderobjekts (8) anhand einer Flächenbelegung der Sensorfläche, insbesondere einer Änderung der Flächenbelegung.

12. Verfahren nach einem der Ansprüche 9 bis 11, **dadurch gekennzeichnet, dass**
die Sensoreinheit (10) als Lichtschranke ausgestaltet ist.

13. Verfahren nach einem der Ansprüche 9 bis 12, zudem umfassend den Verfahrensschritt
Ansteuern des Fördersystems (4) in Antwort auf eine Feststellung des Förderobjekts (8).

14. Verfahren nach einem der Ansprüche 9 bis 13, **dadurch gekennzeichnet, dass**
die differentielle Änderung des detektierten Signals eine Auslöseschwelle überschreiten muss, damit im Überwachungsbereich (6) befindliche Teile des Fördersystems (4) nicht als Förderobjekt (8) festgestellt werden.
